# EUROPEAN PATENT SPECIFICATION

(11) **EP 3 425 632 B1**
(45) Date of publication and mention of the grant of the patent: **02.09.2020**
(21) Application number: 18181775.0
(22) Date of filing: 04.07.2018
(51) Int. Cl.: G10L 15/26, G06F 3/0488, G06F 3/16, G06F 3/01, G06F 3/023, G06F 3/0346, G10L 15/18

(54) **CONVERTING SPEECH TO TEXT AND INSERTING A CHARACTER ASSOCIATED WITH A GESTURE INPUT BY A USER**
UMWANDELN VON SPRACHE IN TEXT UND EINFÜGEN EINES ZEICHENS, DAS MIT EINER VOM BENUTZER EINGEGEBENEN GESTE VERBUNDEN IST.
CONVERSION DE LA PAROLE EN TEXTE ET INSERTION D'UN CARACTÈRE ASSOCIÉ À UN GESTE SAISI PAR UN UTILISATEUR

(30) Priority: 07.07.2017 US 201715644128
(43) Date of publication of application: 09.01.2019
(73) Proprietor: LENOVO ENTERPRISE SOLUTIONS (SINGAPORE) PTE. LTD., Singapore 556741 (SG)
(72) Inventor: KNUDSON, Ryan Charles, Durham, NC North Carolina 27713 (US); ECHOLS, Roderick, Chapel Hill, NC North Carolina 27516 (US); KNOX, Jonathan Gaither, Morrisville, NC 27560 (US); VANBLON, Russell Speight, Raleigh, NC North Carolina 27615 (US)
(74) Representative: Leffers, Thomas

(56) References cited:
- CN-A- 105 869 632
- US-A1- 2011 115 702
- US-B2- 9 182 826

## Description

### BACKGROUND

One method of inputting text into an electronic device is to use a speech-to-text engine that converts a user's speech into text and displays the text on an electronic display. Accuracy of speech-to-text conversion has improved over the years, but sometimes the speech-to-text engine inserts erroneous characters or words when a user attempts to input punctuation using the speech-to-text engine. An example of controlling, in this context, the input of punctuation using hand gestures is disclosed in US 9,182,826 B2.

### BRIEF SUMMARY

An apparatus for using a gesture to insert a character is proposed as in independent claim 1.

A method for using a gesture to insert a character is proposed as in independent claim 11.

A program product for using a gesture to insert a character is proposed as in independent claim 16.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a system for inputting a character into text;
Figure 2 is a schematic block diagram illustrating one embodiment of an electronic device with an embodiment of a gesture module and other components of the electronic device;
Figure 3 is a schematic block diagram illustrating one embodiment of a gesture module;
Figure 4 is a schematic block diagram illustrating one embodiment of a touchscreen of an electronic device illustrating a condition where a gesture module may be used;
Figure 5 is a schematic flow chart diagram illustrating one embodiment of a method for inputting a character into text; and
Figure 6 is a schematic flow chart diagram illustrating one embodiment of another method for inputting a character into text.

### DETAILED DESCRIPTION

As will be appreciated by one skilled in the art, aspects of the embodiments may be embodied as a system, method or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, comprise one or more physical or logical blocks of executable code which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic storage device, a magnetic storage device, an optical storage device, an electromagnetic storage device, an infrared storage device, a holographic storage device, a micromechanical storage device, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. These code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which comprises one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

An apparatus for using a gesture to insert a character is disclosed. A method and computer program product also perform the functions of the apparatus. The apparatus includes a processor and a memory that stores code executable by the processor. The executable code causes the processor to receive speech input from a user of an electronic device, convert the speech to text, receives a gesture from the user, associate the received gesture with a character and input the character into the text.

In one embodiment, associating a character with the received gesture is based on semantics of the text converted from the speech including a likelihood that the character belongs at an insertion point in the text converted from the speech. In another embodiment, the semantics includes determining a likelihood that the character is expected after text converted from the speech. In another embodiment, the character includes a punctuation character or a special character, where the special character is a character other than punctuation and alphabet characters.

In some embodiments, the gesture is input through a camera of the electronic device. In other embodiments, the gesture is input through a gyroscope, a proximity sensor and/or an accelerometer of the electronic device. In other embodiments, the gesture is input through a portion of a touchscreen of the electronic device, where the portion of the touchscreen is a portion of the touchscreen not displaying keyboard characters. In another embodiment, inputting the character into the text includes inputting the character after the text converted from speech and before additional text converted from additional speech.

In some embodiments, the memory includes a data structure with a plurality of characters and a stored gesture associated with each character. In the embodiment, associating a character with the received gesture includes looking up a stored gesture matching the received gesture and retrieving the character associated with the stored gesture. In other embodiments, the speech is received through a microphone in communication with the electronic device.

A method for using a gesture to insert a character includes receiving, by use of a processor, speech input from a user of an electronic device, converting, by use of a processor, the speech to text, receiving, by use of a processor, a gesture from the user, associating, by use of a processor, the received gesture with a character, and inputting, by use of a processor, the character into the text.

In some embodiments, associating a character with the received gesture is based on semantics of the text converted from the speech including a likelihood that the character belongs at an insertion point in the text converted from the speech. In some embodiments, the gesture is input through a camera of the electronic device, a gyroscope of the electronic device, an accelerometer of the electronic device and/or a portion of a touchscreen of the electronic device, where the portion of the touchscreen is a portion of the touchscreen not displaying keyboard characters. In some embodiments, inputting the character into the text includes inputting the character after the text converted from speech and before additional text converted from additional speech.

In some embodiments, the method includes a data structure with a plurality of characters and a stored gesture associated with each character, where associating a character with the received gesture includes looking up a stored gesture matching the received gesture and retrieving the character associated with the stored gesture. In some embodiments, inputting the character into the text includes inputting the character after the text converted from speech and before additional text converted from additional speech.

A program product for using a gesture to insert a character includes a computer readable storage medium that stores code executable by a processor, where the executable code includes code to perform receiving speech input from a user of an electronic device, converting the speech to text, receiving a gesture from the user, associating the received gesture with a character and inputting the character into the text.

In some embodiments, associating a character with the received gesture is based on semantics of the text converted from the speech including a likelihood that the character belongs at an insertion point in the text converted from the speech. In other embodiments, the gesture is input through a camera of the electronic device, a gyroscope of the electronic device, an accelerometer of the electronic device and/or a portion of a touchscreen of the electronic device, where the portion of the touchscreen is a portion of the touchscreen not displaying keyboard characters. In some embodiments, inputting the character into the text includes inputting the character after the text converted from speech and before additional text converted from additional speech.

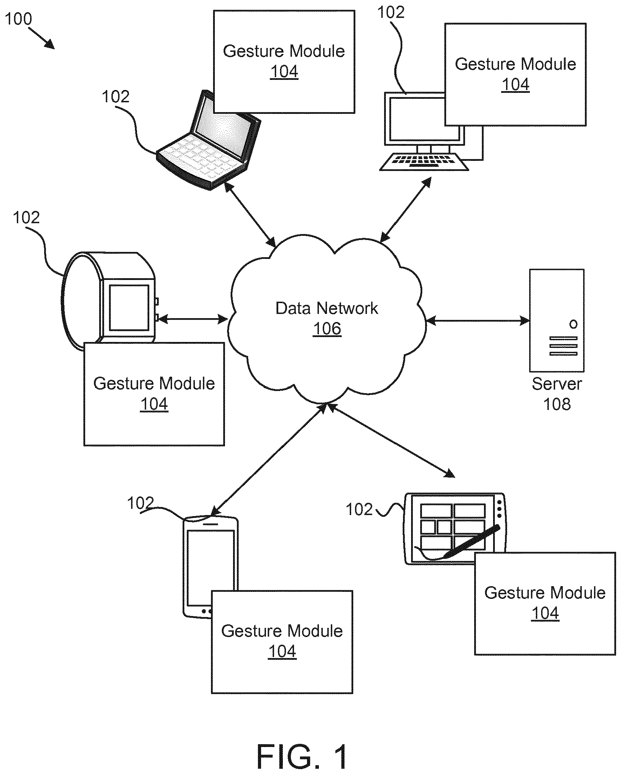

Figure 1 is a schematic block diagram illustrating one embodiment of a system 100 for inputting a character into text. The system 100 includes electronic devices 102, a gesture module 104 for each electronic device 102, a data network 106 and a server 108, which are described below.

The system 100 includes one or more electronic devices 102, such as a smart phone, a tablet computer, a smart watch, a fitness band or other wearable activity tracking device, a gaming device, a laptop computer, a virtual reality headset, smart glasses, a personal digital assistant, a digital camera, a video camera, and the like. Typically, an electronic device 102 is a mobile electronic device and is portable by a user. In other embodiments, the electronic device 102 is a desktop computer, a server, a workstation, a security system, a set-top box, a gaming console, a smart TV, etc. and may have components suitable for receiving a gesture.

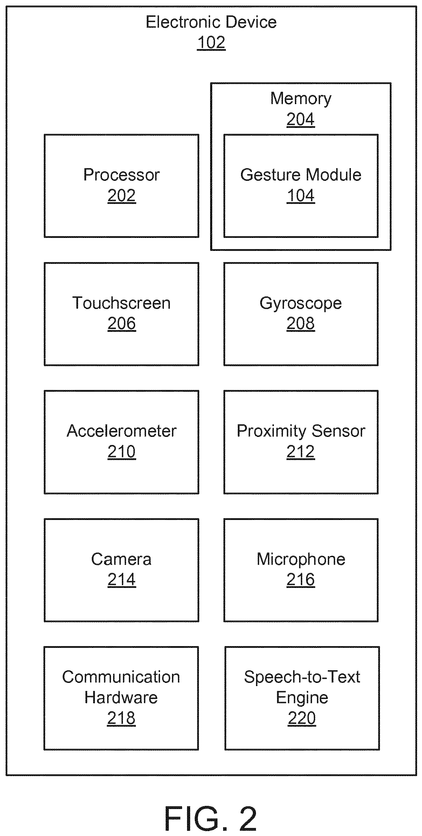

Each electronic device 102 is capable of converting text to speech, receiving a gesture from the user, associating a gesture with a character, and inserting the character into the text. In some embodiments, the gesture is input by the user and the electronic device 102 is capable of detecting the gesture using one or more sensors. An electronic device 102, in some embodiments includes one or more sensors that are able to detect a gesture of the user. The sensors will be described further in regards the electronic device 102 of Figure 2.

The electronic device 102 includes a processor (e.g., a central processing unit ("CPU"), a processor core, a field programmable gate array ("FPGA") or other programmable logic device, an application specific integrated circuit ("ASIC"), a controller, a microcontroller, and/or another semiconductor integrated circuit device) and memory 204, such as a volatile memory, a non-volatile storage medium, and the like.

In certain embodiments, the electronic devices 102 are communicatively coupled to one or more other electronic devices 102 and/or to one or more servers 108 over a data network 106, described below. The electronic devices 102, in a further embodiment, may include processors, processor cores, and FPGA, an ASIC, etc. that are configured to execute various programs, program code, applications, instructions, functions, and/or the like. The electronic devices 102 may include speakers, or other hardware, configured to produce sounds, such as those played during startup, execution of an application, etc.

The gesture module 104 that receives a gesture during a speech to text operation of the electronic device 102 associates the gesture with a character and inserts the character into the text. The gesture differs from other input of the electronic device 102 to insert text, such as typing, selecting characters on a display of characters, etc. For example, the gesture is not typing on a keyboard or keyboard display or input from a mouse. The gesture module 104 solves the technical problem of inputting punctuation, special characters, etc. an electronic device 102 during a speech-to-text operation where speaking the character may be misinterpreted. For example, during a speech-to-text operation a user may want to insert an ellipsis, which includes three periods, into the text and the gesture module 104 avoids the problem of a speech-to-text engine writing "dot dot dot" instead of "..." as the user desires.

In various embodiments, the gesture module 104 may be embodied as a hardware appliance that can be installed or deployed on an electronic device 102, or elsewhere on the data network 106. In certain embodiments, the gesture module 104 may include a hardware device such as a secure hardware dongle or other hardware appliance device (e.g., a set-top box, a network appliance, or the like) that attaches to a device such as a laptop computer, a server 108, a tablet computer, a smart phone, a security system, or the like, either by a wired connection (e.g., a universal serial bus ("USB") connection) or a wireless connection (e.g., Bluetooth®, Wi-Fi, near-field communication ("NFC"), or the like); that attaches to an electronic display device (e.g., a television or monitor using an HDMI port, a DisplayPort port, a Mini DisplayPort port, VGA port, DVI port, or the like); and/or the like. A hardware appliance of the gesture module 104 may include a power interface, a wired and/or wireless network interface, a graphical interface that attaches to a display, and/or a semiconductor integrated circuit device as described below, configured to perform the functions described herein with regard to the gesture module 104.

The gesture module 104, in such an embodiment, may include a semiconductor integrated circuit device (e.g., one or more chips, die, or other discrete logic hardware), or the like, such as an FPGA or other programmable logic, firmware for an FPGA or other programmable logic, microcode for execution on a microcontroller, an ASIC, a processor, a processor core, or the like. In one embodiment, the gesture module 104 may be mounted on a printed circuit board with one or more electrical lines or connections (e.g., to volatile memory, a non-volatile storage medium, a network interface, a peripheral device, a graphical/display interface, or the like). The hardware appliance may include one or more pins, pads, or other electrical connections configured to send and receive data (e.g., in communication with one or more electrical lines of a printed circuit board or the like), and one or more hardware circuits and/or other electrical circuits configured to perform various functions of the gesture module 104.

The semiconductor integrated circuit device or other hardware appliance of the gesture module 104, in certain embodiments, includes and/or is communicatively coupled to one or more volatile memory media, which may include but is not limited to random access memory ("RAM"), dynamic RAM ("DRAM"), cache, or the like. In one embodiment, the semiconductor integrated circuit device or other hardware appliance of the gesture module 104 includes and/or is communicatively coupled to one or more non-volatile memory media, which may include but is not limited to: NAND flash memory, NOR flash memory, nano random access memory (nano RAM or NRAM), nanocrystal wire-based memory, silicon-oxide based sub-10 nanometer process memory, graphene memory, Silicon-Oxide-Nitride-Oxide-Silicon ("SONOS"), resistive RAM ("RRAM"), programmable metallization cell ("PMC"), conductive-bridging RAM ("CBRAM"), magneto-resistive RAM ("MRAM"), dynamic RAM ("DRAM"), phase change RAM ("PRAM" or "PCM"), magnetic storage media (e.g., hard disk, tape), optical storage media, or the like.

The data network 106, in one embodiment, includes a digital communication network that transmits digital communications. The data network 106 may include a wireless network, such as a wireless cellular network, a local wireless network, such as a Wi-Fi network, a Bluetooth® network, a near-field communication ("NFC") network, an ad hoc network, and/or the like. The data network 106 may include a wide area network ("WAN"), a storage area network ("SAN"), a local area network (LAN), an optical fiber network, the internet, or other digital communication network. The data network 106 may include two or more networks. The data network 106 may include one or more servers, routers, switches, and/or other networking equipment. The data network 106 may also include one or more computer readable storage media, such as a hard disk drive, an optical drive, non-volatile memory, RAM, or the like.

The wireless connection may be a mobile telephone network. The wireless connection may also employ a Wi-Fi network based on any one of the Institute of Electrical and Electronics Engineers ("IEEE") 802.11 standards. Alternatively, the wireless connection may be a Bluetooth® connection. In addition, the wireless connection may employ a Radio Frequency Identification ("RFID") communication including RFID standards established by the International Organization for Standardization ("ISO"), the International Electrotechnical Commission ("IEC"), the American Society for Testing and Materials® ("ASTM®"), the DASH7™ Alliance, and EPCGlobal™.

Alternatively, the wireless connection may employ a ZigBee® connection based on the IEEE 802 standard. In one embodiment, the wireless connection employs a Z-Wave® connection as designed by Sigma Designs®. Alternatively, the wireless connection may employ an ANT® and/or ANT+® connection as defined by Dynastream® Innovations Inc. of Cochrane, Canada.

The wireless connection may be an infrared connection including connections conforming at least to the Infrared Physical Layer Specification ("IrPHY") as defined by the Infrared Data Association® ("IrDA®"). Alternatively, the wireless connection may be a cellular telephone network communication. All standards and/or connection types include the latest version and revision of the standard and/or connection type as of the filing date of this application.

Figure 2 is a schematic block diagram illustrating one embodiment of an electronic device 102 with an embodiment of a gesture module 104 and other components of the electronic device 102. The electronic device 102 includes a processor 202, memory 204, a touchscreen 206, a gyroscope 208, an accelerometer 210, a proximity sensor 212, a camera 214, a microphone 216, communication hardware 218, and a speech-to-text engine 220, which are described below.

The electronic device 102 includes a processor 202 and memory 204 in communication with the processor 202. The processor 202 may be as described above and may execute commands stored in memory 204. The memory 204 is depicted in Figure 2 as separate but may be integrated with a processor 202 so that instructions of the gesture module 104 are integrated in the processor 202. For example, the processor 202 and memory 204 may be implemented in an FPGA, ASIC, etc.

The memory 204 may be implemented as a volatile memory and or a non-volatile memory as described above. In one embodiment, the gesture module 104 is loaded into memory 204 before execution, for example from a hard disk drive to RAM. In another embodiment, the gesture module 104 is stored in solid-state storage, ROM, etc. that is accessible by the processor 202. One of skill in the art will recognize other ways to implement a processor 202 and memory 204 to store and execute the gesture module 104.

The electronic device 102, in some embodiments, includes a touchscreen 206 or other electronic display (not shown) in communication with the processor 202 and other devices within the electronic device 102. The touchscreen 206 or other electronic display may display text converted from speech of a user of the electronic device 102. The touchscreen 206, in one embodiment, may receive a gesture from a user. In the embodiment, the gesture includes the user touching, swiping, etc. the touchscreen 206 while gesturing to input a character. The touchscreen 206 or other electronic display may be integrated into the electronic device 102 or may be separate from the electronic device 102 and is in communication with the electronic device 102 wirelessly or through a cable.

The electronic device 102, in some embodiments, includes a gyroscope 208, an accelerometer 210, a proximity sensor 212 or other motion sensing device that may be used to detect a gesture from the user in the form of movement of the electronic device 102. For example, the user may move the electronic device 102 in a particular direction, may shake the electronic device 102, may tilt the electronic device 102, etc. as part of the gesture. The gesture may include a pattern of movements.

The electronic device 102, in some embodiments, includes a camera 214 that may be pointed at the user to receive a gesture from the user. For example, the gesture may include a hand signal, movement of a body part, etc. as a way for the user to input a character into text. In one embodiment, the camera 214 is integrated with the electronic device 102, such as a forward facing camera 214 that is on a same side as a touchscreen 206 of the electronic device 102. In another embodiment, the camera 214 is separate from the electronic device 102 and is connected to the electronic device 102 wirelessly or through a cable. The camera 214 may be controlled and directed by the processor 202 during execution of instructions that are part of the gesture module 104.

The electronic device 102, in some embodiments, includes a microphone 216, which may receive voice input from the user, for example during a speech-to-text operation. The microphone 216 may be integrated with or separate from the electronic device 102. The microphone 216, in one embodiment, may receive input from the user during execution of the gesture module 104. In one embodiment, a gesture may be received by a variety of sensors. For example, a gesture may include movement of a hand or other body part of the user along with movement of the electronic device 102 so that the camera 214, gyroscope 208, accelerometer 210, proximity sensor 212, etc. may receive input for the gesture.

The electronic device 102 includes communication hardware 218, such as a network adapter that may communicate with the server 108 or other electronic devices 102, as described above. The communication hardware 218 may allow the user to communicate, for example, during a phone call or through digital communications. The communication hardware 218 may include one or more input devices, such as a keyboard, a mouse, etc. The keyboard and/or mouse may be integrated with the electronic device 102, such as keys on the electronic device 102, a touchpad, a keyboard on the touchscreen 206, etc. or may be separate from the electronic device 102.

The electronic device 102 includes a speech-to-text engine 220 that receives speech of a user of the electronic device 102, for example through the microphone 216, and converts the speech to text. The speech-to-text engine 220, in one embodiment, is a hardware device, which may include a processor, memory, hardware circuits, etc. and the hardware device may be connected to the microphone 216. In some embodiments, the speech-to-text engine 220 is located in memory 204 and includes executable code stored in memory 204 where the executable code may be executed on the processor 202.

The speech-to-text engine 220 may be integrated with the processor 202 and may include other components useful in converting speech to text. The speech-to-text engine 220 interprets speech of a user to determine appropriate text that corresponds to speech. The speech-to-text engine 220 uses semantic analysis and other semantic tools to aid in conversion of speech to text. The speech-to-text engine 220 may include adaptive learning methods that recognize speech of a particular user to improve accuracy of speech-to-text conversion.

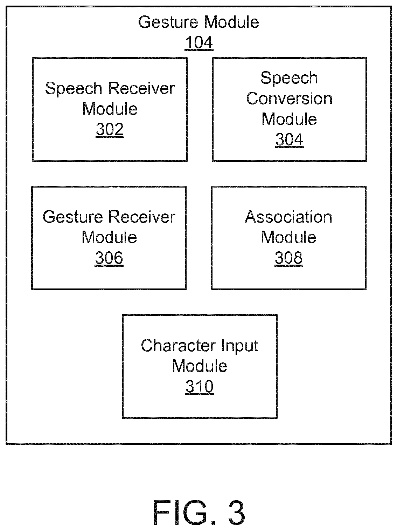

Figure 3 is a schematic block diagram illustrating one embodiment of a gesture module 104. The gesture module 104 includes a speech receiver module 302, a speech conversion module 304, a gesture receiver module 306, an association module 308 and a character input module 310, which are described below.

The gesture module 104 includes a speech receiver module 302 that receives speech input from the user of an electronic device 102. For example, the speech receiver module 302 may be part of the speech-to-text engine 220. In one embodiment, the electronic device 102 is in a speech-to-text mode while receiving speech input from the user. For example, the user may press a microphone button or other object displayed on a touchscreen 206 or other electronic display to signal the speech-to-text engine 220 and/or speech receiver module 302 to start receiving and analyzing speech of a user of the electronic device 102.

For instance, the user may be inputting text into a messaging application, a writing application, a note taking application, or other application where the user inputs text. The speech receiver module 302 may ignore speech prior to entering the speech-to-text mode and may then start receiving speech. In another instance, entering a speech-to-text mode is automatic without input from the user, for example when a particular application starts up. In another embodiment, the user may start an application and then may enter the speech-to-text mode.

The gesture module 104 includes a speech conversion module 304 that converts the speech to text. In one embodiment, the speech conversion module 304 is part of the speech-to-text engine 220 and receives speech from the speech receiver module 302 and then converts the received speech to text. In one embodiment, the speech conversion module 304 displays the text converted from speech on the touchscreen 206 or other electronic display. For example, the speech conversion module 304 displays text on a continuous basis as the user speaks so the user is able to view progress of the speech-to-text process. The speech conversion module 304 may input the text into a message of the user in a messaging application, as text on a page of a writing application, as text in an email, etc.

The gesture module 104 includes a gesture receiver module 306 that receives a gesture from the user of the electronic device 102. The gesture is received through a sensor of the electronic device 102. In one embodiment, the gesture receiver module 306 receives the gesture while the electronic device 102 is in a speech-to-text mode. In the embodiment, receiving a gesture is part of the speech to text operation.

In one embodiment, the sensor of the electronic device 102 includes a touchscreen 206 and the gesture module 104 receives the gesture by sensing touches and/or swipes across the touchscreen 206 in a particular pattern. For example, the user may tap and or swipe the touchscreen 206 in a particular pattern to input a particular gesture and the gesture module 104 may detect the gesture. In the embodiment, the gesture excludes tapping, swiping or otherwise selecting icons or similar items displayed on the touchscreen 206, such as particular keys on a virtual keyboard on the touchscreen 206. For example, the gesture does not include tapping a punctuation character or other special character or group of characters. In one embodiment, the special character is a character different than other punctuation and alphabet characters. The gesture, in one embodiment, is performed in regions of the touchscreen 206 without displayed keys, controls, etc.

In another embodiment, the sensor of the electronic device 102 includes an accelerometer 210, a proximity sensor 212 a gyroscope 208, etc. and the gesture receiver module 306 receives the gesture by sensing one or more movements of the electronic device 102 in a particular pattern. The movements may include tilting, shaking, rotating, etc. the electronic device 102 in a particular pattern where each pattern corresponds to one or more characters, such as a period, a question mark, an exclamation point, a special character, etc. For example, tilting the electronic device 102 to the right three times and once to the left may correlate to an ellipsis.

In another embodiment, the sensor of the electronic device 102 includes the camera 214 and the gesture receiver module 306 receives the gesture by detecting a finger, a hand, etc. of the user moving in a particular pattern. In the embodiment, activating the speech-to-text mode activates the camera 214. The camera 214 may receive a gesture that corresponds to a character. For example, the user may point an index finger at the electronic device 102, to the touchscreen 206 or another electronic display, and the user may move the index finger toward the electronic device 102, the touchscreen 206, the electronic display, the camera 214, etc. and the gesture may correlate to a period. In another embodiment, a dot gesture with a slash gesture may correlate to a semicolon.

In one embodiment, the sensor of the electronic device 102 includes a microphone 216 and the gesture receiver module 306 receives the gesture by detecting a particular sound or series of sounds. For example, the gesture receiver module 306 may detect a whistle, a clap or other sound other than language of the user. The sound may be a special sound that differs significantly from a user speaking a particular language.

In some embodiments, a gesture is received by multiple sensors. For example, a gesture may include movement detected by the camera 214 and by the touchscreen 206. In another example, a gesture may include movements of the electronic device 102 as sensed by the gyroscope 208, accelerometer 210, etc. in combination with movements of a body part as sensed by the camera 214. One of skill in the art will recognize other combination gestures that use multiple sensors.

The gesture module 104 includes an association module 308 that associates the received gesture with a character. For example, the association module 308 may include a data structure such as a table, a database, a library, etc. with characters that are associated with gestures. The association module 308, in one embodiment, interprets the received gesture and converts the received gesture to a set of instructions, motions, etc. that are entered in a data structure where the set is linked to a particular character. For example, the set may include interpretations, such as "swipe right," "point index finger," "tilt electronic device to the right," etc.

In another embodiment, each gesture includes previously recorded input from one or more sensors associated with one or more characters and the association module 308 compares the previously recorded input with the received gesture. For example, for a particular character or set of characters a user may record a gesture with the camera 214, touchscreen 206 or sensors that react to motion, such as the gyroscope 208, accelerometer 210, proximity sensor 212, etc. and the association module 308 may associate the recorded sensor data with the character(s) in an operation prior to a speech-to-text operation. The previously recorded gesture may be input by the user or may be a feature with the gesture module 104. The association module 308 may then compare sensor data of the received gesture with the recorded sensor data and may select a character where the received gesture is deemed a match to the recorded sensor data associated with the character.

In one embodiment, the association module 308 may match sensor input with sensor data from the received gesture by looking at amplitudes and timing of the recorded sensor data and the received gesture sensor data. In another embodiment, the association module 308 compiles a gesture confidence score based on comparing data from various sensors and the association module 308 may associate the received gesture with a particular character when the gesture confidence score for that character is above a gesture confidence threshold.

In another embodiment, the association module 308 associates a character with the received gesture is based on semantics of the text converted from the speech including a likelihood that the character belongs at an insertion point in the text converted from the speech. In one example, the semantics includes determines a likelihood that the character is expected after the text converted from the speech. The insertion point, in one embodiment is at an end of text converted to speech just before the gesture receiver module 306 received a gesture. In another embodiment, the insertion point is at a cursor in the text.

The association module 308, may analyze text before the insertion point to predict which character belongs at the insertion point. For example, the association module 308 may associate a character confidence score for the particular insertion point. In one example, the association module 308 uses a character confidence score between 1 and 100 and a period may have a character confidence score of 73, a question mark may have a character confidence score of 27, a comma may have a character confidence score of 19, etc. In the embodiment, the association module 308 may use the character confidence score when associating a character with a received gesture.

In another embodiment, the association module 308 uses both the character confidence score and the gesture confidence score in a combined confidence score to associate a character with a received gesture. For example, a gesture confidence score for a period may be relatively low, due to the user inputting a gesture that for a period that is somewhat different than a recorded gesture for a period and the character confidence score is relatively high so the combined confidence score is higher than a combined threshold and the association module 308 may then associate the period with the received gesture.

The gesture module 104 includes a character input module 310 that inputs the character into the text. For example, the character input module 310 may insert the character in response to the association module 308 associating a character with the received gesture. In one embodiment, the character input module 310 inputs the character at the end of text converted from speech and before text from additional speech. In another embodiment, the character input module 310 inserts the character at a cursor location.

The gesture module 104 is beneficial to prevent errors when inserting punctuation and other special characters from speech where a typical speech-to-text engine 220 may misinterpret the speech as literal instead of insertion of punctuation or a special character. For example, a user may enter a gesture associated with "π" so that the speech-to-text engine 220 does not enter "pie." In another example, a user may enter a gesture associated with a period so that the character input module 310 enters a "." instead of the word "period."

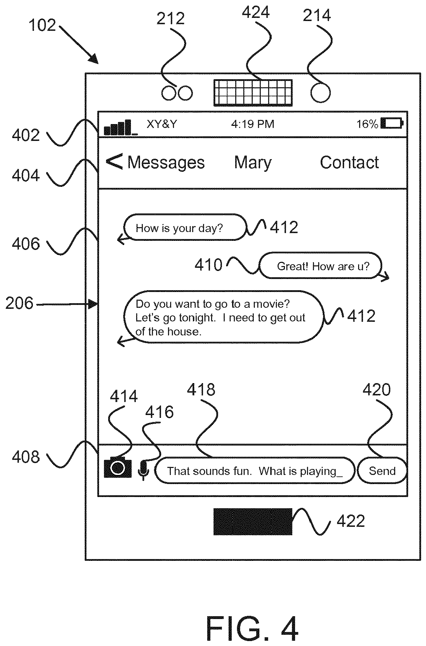

Figure 4 is a schematic block diagram illustrating one embodiment of a touchscreen 206 of an electronic device 102 illustrating a condition where a gesture module 104 may be used. The electronic device 102 in the depicted embodiment is typical of a smartphone and may include a top portion 402 with a signal strength indicator, a carrier name, a time of day, a battery status indicator and other icons representing status and commands of the smartphone. The touchscreen 206 is also displaying a messaging application for sending and receiving short message service ("SMS") messages. A contact/control window 404 may include an arrow that allows return to a previous screen and may include a name of a contact. In the embodiment, the name of the contact is Mary. The contact/control window 404 may also include a means for editing the contact. In the contact/control window 404, the word "Contact" is displayed and may be touched by a user to edit the contact.

A message window 406 may display messages 410 previously sent to the contact and messages 412 received from the contact. In the embodiment, messages received from the contact include an arrow to the left and messages sent by the user include an arrow to the right. The touchscreen 206 may also include a lower portion 408 that includes a camera icon 414 for attaching photographs or other media to a text message, a microphone icon 416, a message window 418 for entering messages and a send button 420 for sending the message in the message window 418. The microphone icon 416 may be used to enter a speech-to-text mode. The electronic device 102 may include a button 422 to be used for various purposes, such as returning to a home screen, and may include other buttons, such as a "back" button, a windows button, etc. The electronic device 102 may also include a speaker 424, a proximity sensor 212, a camera 214 as well as other buttons and sensors that are now shown.

In one embodiment, the user may press the microphone icon 416 to enter a speech-to-text mode where speech of the user is received through a microphone 216 (not shown) and by the speech receiver module 302 and is converted to text and input into the message window 418, for example by the speech conversion module 304. In the depicted embodiment, the message "That sounds fun. What is playing_" is displayed where a cursor, depicted with an underscore, is after the word "playing." The user may gesture, for example with a hand signal, by moving the smartphone, etc. to insert a question mark. The gesture corresponds to the question mark symbol and may be received through the gesture receiver module 306 using one or more sensors in the smartphone. The association module 308 associates the received gesture with a question mark and the character input module 310 inserts the question mark at the cursor. The user may then press the send button 420. The illustrated embodiment is one example and the gesture module 104 may be used for other devices and other applications.

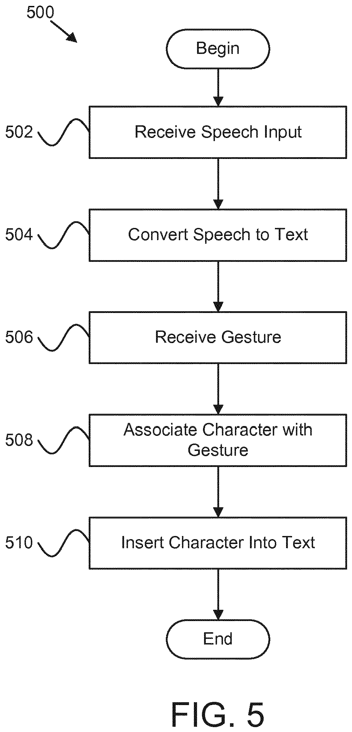

Figure 5 is a schematic flow chart diagram illustrating one embodiment of a method 500 for inputting a character into text. The method 500 begins and receives 502 speech input from the user of an electronic device 102 and converts 504 the speech to text. For example, the text may be input into a messaging program, a writing program, an email program, and the like. The method 500 receives 506 a gesture from the user. The gesture may be received through one or more sensors of the electronic device 102, such as a camera 214, a touchscreen 206, a gyroscope 208, an accelerometer 210, etc. The method 500 associates 508 the received gesture with one or more characters and inputs 510 the character into the text, and the method 500 ends. In various embodiments, the method 500 may use the speech receiver module 302, the speech conversion module 304, the gesture receiver module 306, the association module 308 and/or the character input module 310.

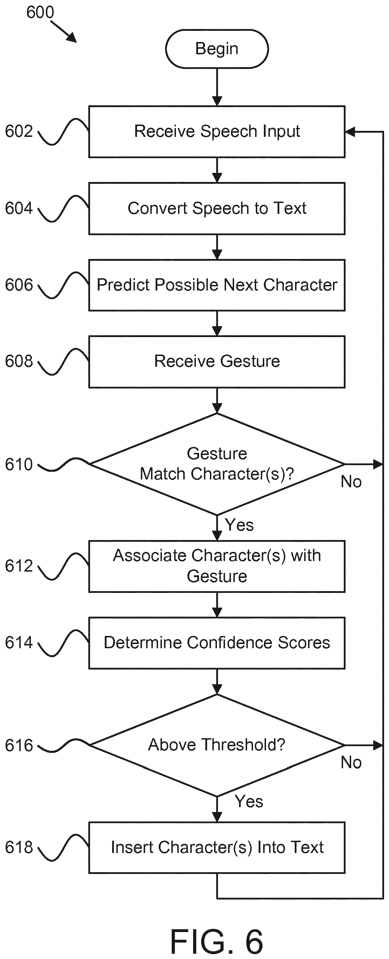

Figure 6 is a schematic flow chart diagram illustrating one embodiment of another method 600 for inputting a character into text. The method 600 begins and receives 502 speech input from a user of an electronic device 102 and converts 604 the speech to text. The method 600, in some embodiments, predicts 606 a possible next character, such as a period, an exclamation point, a question mark, etc., for example using semantic analysis. The method receives 608 a gesture from the user and determines 610 if the gesture matches a character or a group of characters (e.g. three periods in an ellipsis). If the method 600 determines 610 that the gesture does not match a character or a group of characters, the method returns and receives 602 speech from the user.

If the method 600 determines 610 that the gesture matches a character or a group of characters, the method 600 associates the matched character or group of characters with the character(s) and determines 614 a combined confidence score. The combined confidence score is based on a character confidence score and a gesture confidence score. The gesture confidence score, in one embodiment, is a measure of how close the gesture is to a stored gesture associated with a character and the character confidence score, in one embodiment, is a prediction of a next character after the text.

The method 600 determines 616 if the combined confidence score is above a combined threshold. If the method 600 determines 616 that the combined confidence score is not above a combined threshold, the method 600 returns and receives 602 speech from the user. If the method 600 determines 616 that the combined confidence score is above a combined threshold, the method 600 inserts 618 the character(s) into the text, and the method 600 ends. In various embodiments, the method 600 may use the speech receiver module 302, the speech conversion module 304, the gesture receiver module 306, the association module 308 and/or the character input module 310.

Embodiments may be practiced in other specific forms. The described embodiments are to be considered in all respects only as illustrative and not restrictive. The scope of the invention is, therefore, indicated by the appended claims rather than by the foregoing description.

## Claims

1. An apparatus comprising:
a processor;
a memory that stores code executable by the processor to:
receive speech input from a user of an electronic device;
convert the speech to text and predict a possible next character;
receive a gesture from the user;
associate the received gesture with a character, and
input the character into the text, **characterized in that** a combined confidence score is used to associate the received gesture with a character, wherein the combined confidence score is based on a character confidence score and a gesture confidence score, and wherein the gesture confidence score is a measure of how close the gesture is to a stored gesture associated with a character and the character confidence score is the prediction of a next character after the text.

2. The apparatus of claim 1, wherein to associate a character with the received gesture is based on semantics of the text converted from the speech including a likelihood that the character belongs at an insertion point in the text converted from the speech.

3. The apparatus of claim 2, wherein the semantics comprises the processor to determine a likelihood that the character is expected after text converted from the speech.

4. The apparatus of claim 1, wherein the character comprises one of a punctuation character and a special character, the special character comprising a character other than punctuation and alphabet characters.

5. The apparatus of claim 1, wherein the gesture is input through a camera of the electronic device.

6. The apparatus of claim 1, wherein the gesture is input through one or more of a gyroscope, a proximity sensor and an accelerometer of the electronic device.

7. The apparatus of claim 1, wherein the gesture is input through a portion of a touchscreen of the electronic device, the portion of the touchscreen comprising a portion of the touchscreen not displaying keyboard characters.

8. The apparatus of claim 1, wherein to input the character into the text comprises the processor to input the character after the text converted from speech and before additional text converted from additional speech.

9. The apparatus of claim 1, wherein the memory further comprises a data structure comprising a plurality of characters and a stored gesture associated with each character, wherein to associate a character with the received gesture comprises the processor to lookup a stored gesture matching the received gesture and to retrieve the character associated with the stored gesture.

10. The apparatus of claim 1, wherein the speech is received through a microphone in communication with the electronic device.

11. A method comprising:
receiving, by use of a processor, speech input from a user of an electronic device;
converting, by use of a processor, the speech to text and predicting a possible next character;
receiving, by use of a processor, a gesture from the user;
associating, by use of a processor, the received gesture with a character; and
inputting, by use of a processor, the character into the text, **characterized in that** a combined confidence score is used to associate the received gesture with a character, wherein the combined confidence score is based on a character confidence score and a gesture confidence score, and wherein the gesture confidence score is a measure of how close the gesture is to a stored gesture associated with a character and the character confidence score is the prediction of a next character after the text.

12. The method of claim 11, wherein associating a character with the received gesture is based on semantics of the text converted from the speech including a likelihood that the character belongs at an insertion point in the text converted from the speech.

13. The method of claim 11, wherein the gesture is input through one or more of:
a camera of the electronic device;
a gyroscope of the electronic device;
an accelerometer of the electronic device; and
a portion of a touchscreen of the electronic device, the portion of the touchscreen comprising a portion of the touchscreen not displaying keyboard characters.

14. The method of claim 11, wherein inputting the character into the text comprises inputting the character after the text converted from speech and before additional text converted from additional speech.

15. The method of claim 11, further comprising a data structure comprising a plurality of characters and a stored gesture associated with each character, wherein associating a character with the received gesture comprises looking up a stored gesture matching the received gesture and retrieving the character associated with the stored gesture.

16. A program product comprising a computer readable storage medium that stores code executable by a processor, the executable code comprising code to perform:
receiving speech input from a user of an electronic device;
converting the speech to text and predicting a possible next character;
receiving a gesture from the user;
associating the received gesture with a character; and
inputting the character into the text, **characterized in that** a combined confidence score is used to associate the received gesture with a character, wherein the combined confidence score is based on a character confidence score and a gesture confidence score, and wherein the gesture confidence score is a measure of how close the gesture is to a stored gesture associated with a character and the character confidence score is the prediction of a next character after the text.

17. The program product of claim 16, wherein associating a character with the received gesture is based on semantics of the text converted from the speech including a likelihood that the character belongs at an insertion point in the text converted from the speech.

18. The program product of claim 16, wherein the gesture is input through one or more of:
a camera of the electronic device;
a gyroscope of the electronic device;
an accelerometer of the electronic device; and
a portion of a touchscreen of the electronic device, the portion of the touchscreen comprising a portion of the touchscreen not displaying keyboard characters.

19. The program product of claim 16, wherein inputting the character into the text comprises inputting the character after the text converted from speech and before additional text converted from additional speech.

## Patentansprüche

1. Vorrichtung umfassend:
einen Prozessor;
einen Speicher, der Code speichert, der von dem Prozessor ausführbar ist zum:
Empfangen einer Spracheingabe von einem Benutzer eines elektronischen Geräts;
Umwandeln der Sprache in Text und Vorhersagen eines möglichen nächsten Zeichens;
Empfangen einer Geste von dem Benutzer;
Zuordnen der empfangenen Geste zu einem Zeichen, und
Eingeben des Zeichens in den Text, **dadurch gekennzeichnet, dass** ein kombinierter Vertrauenswert verwendet wird, um die empfangene Geste einem Zeichen zuzuordnen, wobei der kombinierte Vertrauenswert auf einem Zeichen-Vertrauenswert und einem Gesten-Vertrauenswert basiert und wobei der Gesten-Vertrauenswert ein Maß dafür ist, wie nah die Geste an einer gespeicherten Geste ist, die einem Zeichen zugeordnet ist und der Zeichen-Vertrauenswert die Vorhersage eines nächsten Zeichens nach dem Text ist.

2. Vorrichtung nach Anspruch 1, wobei das Zuordnen eines Zeichens zu der empfangenen Geste auf der Semantik des Textes, der aus der Sprache umgewandelt wurde, basiert, inklusive einer Wahrscheinlichkeit, dass das Zeichen an einen Einfügepunkt in dem Text, der aus der Sprache umgewandelt wurde, gehört.

3. Vorrichtung nach Anspruch 2, wobei die Semantik umfasst, dass der Prozessor eine Wahrscheinlichkeit bestimmt, dass das Zeichen nach Text, der aus der Sprache umgewandelt wurde, erwartet wird.

4. Vorrichtung nach Anspruch 1, wobei das Zeichen eines von einem Interpunktionszeichen und einem Sonderzeichen umfasst, wobei das Sonderzeichen ein Zeichen umfasst, das von Interpunktions- und Alphabetzeichen verschieden ist.

5. Vorrichtung nach Anspruch 1, wobei die Geste durch eine Kamera des elektronischen Geräts eingegeben wird.

6. Vorrichtung nach Anspruch 1, wobei die Geste durch eines oder mehrere von einem Gyroskop, einem Näherungssensor und einem Beschleunigungsmesser des elektronischen Geräts eingegeben wird.

7. Vorrichtung nach Anspruch 1, wobei die Geste durch einen Bereich eines Berührbildschirms des elektronischen Geräts eingegeben wird, wobei der Bereich des Berührbildschirms einen Bereich des Berührbildschirms umfasst, der keine Tastaturzeichen anzeigt.

8. Vorrichtung nach Anspruch 1, wobei das Eingeben des Zeichens in den Text umfasst, dass der Prozessor das Zeichen nach dem Text, der aus Sprache umgewandelt wurde, und vor zusätzlichem Text, der aus zusätzlicher Sprache umgewandelt wurde, eingibt.

9. Vorrichtung nach Anspruch 1, wobei der Speicher weiter eine Datenstruktur umfasst, die eine Mehrzahl von Zeichen und eine gespeicherte Geste, die jedem Zeichen zugeordnet ist, umfasst, wobei das Zuordnen eines Zeichens zu der empfangenen Geste umfasst, dass der Prozessor eine gespeicherte Geste, die mit der empfangenen Geste übereinstimmt, nachschlägt und das Zeichen, das der gespeicherten Geste zugeordnet ist, abruft.

10. Vorrichtung nach Anspruch 1, wobei die Sprache durch ein Mikrofon empfangen wird, das sich in Kommunikation mit dem elektronischen Gerät befindet.

11. Verfahren, umfassend:
Empfangen einer Spracheingabe von einem Benutzer eines elektronischen Geräts durch Verwendung eines Prozessors;
Umwandeln der Sprache in Text und Vorhersagen eines möglichen nächsten Zeichens durch Verwendung eines Prozessors;
Empfangen einer Geste von dem Benutzer durch Verwendung eines Prozessors;
Zuordnen der empfangenen Geste zu einem Zeichen durch Verwendung eines Prozessors; und
Eingeben des Zeichens in den Text durch Verwendung eines Prozessors, **dadurch gekennzeichnet, dass** ein kombinierter Vertrauenswert verwendet wird, um die empfangene Geste einem Zeichen zuzuordnen, wobei der kombinierte Vertrauenswert auf einem Zeichen-Vertrauenswert und einem Gesten-Vertrauenswert basiert und wobei der Gesten-Vertrauenswert ein Maß dafür ist, wie nah die Geste an einer gespeicherten Geste ist, die einem Zeichen zugeordnet ist und der Zeichen-Vertrauenswert die Vorhersage eines nächsten Zeichens nach dem Text ist.

12. Verfahren nach Anspruch 11, wobei das Zuordnen eines Zeichens zu der empfangenen Geste auf der Semantik des Textes, der aus der Sprache umgewandelt wurde, basiert, inklusive einer Wahrscheinlichkeit, dass das Zeichen an einen Einfügepunkt in dem Text, der aus der Sprache umgewandelt wurde, gehört.

13. Verfahren nach Anspruch 11, wobei die Geste durch eines oder mehrere eingegeben wird von:
einer Kamera des elektronischen Geräts;
einem Gyroskop des elektronischen Geräts;
einem Beschleunigungsmesser des elektronischen Geräts; und
einem Bereich eines Berührbildschirms des elektronischen Geräts, wobei der Bereich des Berührbildschirms einen Bereich des Berührbildschirms umfasst, der keine Tastaturzeichen anzeigt.

14. Verfahren nach Anspruch 11, wobei das Eingeben des Zeichens in den Text ein Eingeben des Zeichens nach dem Text, der aus Sprache umgewandelt wurde, und vor zusätzlichem Text, der aus zusätzlicher Sprache umgewandelt wurde, umfasst.

15. Verfahren nach Anspruch 11, weiter umfassend eine Datenstruktur, die eine Mehrzahl von Zeichen und eine gespeicherte Geste, die jedem Zeichen zugeordnet ist, umfasst, wobei das Zuordnen eines Zeichens zu der empfangenen Geste ein Nachschlagen einer gespeicherten Geste, die mit der empfangenen Geste übereinstimmt, und ein Abrufen des Zeichens, das der gespeicherten Geste zugeordnet ist.

16. Programmprodukt, umfassend ein computerlesbares Speichermedium, das Code speichert, der von einem Prozessor ausführbar ist, wobei der Ausführbare Code Code umfasst, um auszuführen:
Empfangen einer Spracheingabe von einem Benutzer eines elektronischen Geräts;
Umwandeln der Sprache in Text und Vorhersagen eines möglichen nächsten Zeichens;
Empfangen einer Geste von dem Benutzer;
Zuordnen der empfangenen Geste zu einem Zeichen, und
Eingeben des Zeichens in den Text, **dadurch gekennzeichnet, dass** ein kombinierter Vertrauenswert verwendet wird, um die empfangene Geste einem Zeichen zuzuordnen, wobei der kombinierte Vertrauenswert auf einem Zeichen-Vertrauenswert und einem Gesten-Vertrauenswert basiert und wobei der Gesten-Vertrauenswert ein Maß dafür ist, wie nah die Geste an einer gespeicherten Geste ist, die einem Zeichen zugeordnet ist und der Zeichen-Vertrauenswert die Vorhersage eines nächsten Zeichens nach dem Text ist.

17. Programmprodukt nach Anspruch 16, wobei das Zuordnen eines Zeichens zu der empfangenen Geste auf der Semantik des Textes, der aus der Sprache umgewandelt wurde, basiert, inklusive einer Wahrscheinlichkeit, dass das Zeichen an einen Einfügepunkt in dem Text, der aus der Sprache umgewandelt wurde, gehört.

18. Programmprodukt nach Anspruch 16, wobei die Geste durch eines oder mehrere eingegeben wird von:
einer Kamera des elektronischen Geräts;
einem Gyroskop des elektronischen Geräts;
einem Beschleunigungsmesser des elektronischen Geräts; und
einem Bereich eines Berührbildschirms des elektronischen Geräts, wobei der Bereich des Berührbildschirms einen Bereich des Berührbildschirms umfasst, der keine Tastaturzeichen anzeigt.

19. Programmprodukt nach Anspruch 16, wobei das Eingeben des Zeichens in den Text ein Eingeben des Zeichens nach dem Text, der aus Sprache umgewandelt wurde, und vor zusätzlichem Text, der aus zusätzlicher Sprache umgewandelt wurde, umfasst.

## Revendications

1. Appareil comprenant :
un processeur ;
une mémoire qui met en mémoire un code exécutable par le processeur pour :
recevoir une entrée vocale en provenance d'un utilisateur d'un dispositif électronique ;
convertir la parole en texte et prédire le caractère suivant possible ;
recevoir un geste en provenance de l'utilisateur ;
associer le geste reçu avec un caractère, et
entrer le caractère dans le texte **caractérisé en ce qu'**une note de confiance combiné est utilisée pour associer le geste reçu à un caractère, la note de confiance combinée étant basée sur une note de confiance de caractère et une note de confiance de geste, et
la note de confiance de geste étant une mesure de la distance entre le geste et un geste mémorisé associé à un caractère et la note de confiance de caractère étant la prédiction d'un caractère suivant après le texte.

2. Appareil selon la revendication 1, l'association d'un caractère au geste reçu étant basée sur la sémantique du texte converti à partir de la parole incluant une probabilité que le caractère appartienne à un point d'insertion dans le texte converti à partir de la parole.

3. Appareil selon la revendication 2, la sémantique amenant le processeur à déterminer une probabilité que le caractère soit attendu après le texte converti à partir de la parole.

4. Appareil selon la revendication 1, le caractère comprenant un caractère de ponctuation ou un caractère spécial, le caractère spécial comprenant un caractère autre que des caractères alphabétique et de ponctuation.

5. Appareil selon la revendication 1, le geste étant entré par une caméra du dispositif électronique.

6. Appareil selon la revendication 1, le geste étant entré par un gyroscope et/ou un capteur de proximité et/ou un accéléromètre du dispositif électronique.

7. Appareil selon la revendication 1, le geste étant entré par une partie d'un écran tactile du dispositif électronique la partie de l'écran tactile comprenant une partie de l'écran tactile n'affichant pas les caractères de clavier.

8. Appareil selon la revendication 1, pour entrer le caractère dans le texte, le processeur est amené à enter le caractère après le texte converti à partir de la parole et avant le texte supplémentaire converti à partir de la parole supplémentaire.

9. Appareil selon la revendication 1, la mémoire comprenant en outre une structure de données comprenant une pluralité de caractères et un geste mémorisé associé à chaque caractère pour associer un caractère au geste reçu, le processeur étant amené à rechercher un geste mémorisé correspondant au geste reçu et à récupérer le caractère associé au geste mémorisé.

10. Appareil selon la revendication 1, la parole étant reçue par un microphone en communication avec le dispositif électronique.

11. Procédé consistant à :
recevoir, à l'aide d'un processeur, une entrée vocale en provenance d'un utilisateur d'un dispositif électronique ;
convertir, à l'aide d'un processeur, la parole en texte et à prédire un caractère suivant possible ;
recevoir, à l'aide d'un processeur un geste en provenance de l'utilisateur ;
associer, à l'aide d'un processeur, le geste reçu à un caractère ; et
entrer, à l'aide d'un processeur, le caractère dans le texte, **caractérisé en ce qu'**une note de confiance combiné est utilisée pour associer le geste reçu à un caractère, la note de confiance combinée étant basée sur une note de confiance de caractère et une note de confiance de geste, et la note de confiance de geste étant une mesure de la distance entre le geste et un geste mémorisé associé à un caractère et la note de confiance de caractère étant la prédiction d'un caractère suivant après le texte.

12. Procédé selon la revendication 11, l'association d'un caractère au geste reçu étant basée sur la sémantique du texte converti à partir de la parole incluant une probabilité que le caractère appartienne à un point d'insertion dans le texte converti à partir de la parole.

13. Procédé selon la revendication 11, le geste étant entrée par :
une caméra du dispositif électronique ; et/ou
un gyroscope du dispositif électronique et/ou
un accéléromètre du dispositif électronique et
une partie d'un écran tactile du dispositif électronique, la partie du dispositif électronique comprenant une partie de l'écran tactile n'affichant pas les caractères de clavier.

14. Procédé selon la revendication 11, l'entrée du caractère dans le texte consistant à entrer le caractère après le texte converti à partir de la parole et avant le texte supplémentaire converti à partir du texte supplémentaire.

15. Procédé selon la revendication 11, consistant en outre une structure de données consistant en une pluralité de caractères et un geste mémorisé associé à chaque caractère, l'association d'un caractère au geste reçu consistant à rechercher un geste mémorisé correspondant au geste reçu et à récupérer le caractère associé au geste mémorisé.

16. Produit-programme comprenant un support d'enregistrement lisible par ordinateur qui mémorise un code exécutable par un processeur, le code exécutable comprenant un code pour procéder à :
recevoir l'entrée vocale en provenance d'un utilisateur d'un dispositif électronique,
convertir la parole en texte et prédire un possible caractère suivant ;
recevoir un geste en provenance de l'utilisateur ;
associer le geste reçu à un caractère ; et
entrer le caractère dans le texte, **caractérisé en ce que**
une note de confiance combinée est utilisée pour associer le geste reçue à un caractère, la note de confiance combinée étant basée sur une note de confiance de caractère et une note de confiance de geste et la note de confiance de geste étant une mesure de la distance entre le geste et un geste mémorisé associé à un caractère et la note de confiance de caractère étant la prédiction d'un caractère suivant après le texte.

17. Produit-programme selon la revendication 16, l'association d'un caractère au geste reçu étant basée sur la sémantique du texte converti à partir de la parole comprenant une probabilité que le caractère appartienne à un point d'insertion dans le texte converti à partir de la parole.

18. Produit-programme selon la revendication 16, le geste étant entré par un ou plusieurs éléments suivants :
une caméra du dispositif électronique ;
un gyroscope du dispositif électronique ;
un accéléromètre du dispositif électronique ; et
une partie d'un écran tactile du dispositif électronique, la partie de l'écran tactile comprenant une partie de l'écran tactile n'affichant pas des caractères de clavier.

19. Produit-programme selon la revendication 16, l'entrée du caractère dans le texte consistant à entrer le caractère après le texte converti à partir de la parole et avant le texte supplémentaire converti à partir de la parole supplémentaire.
